# EUROPÄISCHE PATENTANMELDUNG

(11) **EP 4 202 849 A1**
(43) Veröffentlichungstag der Anmeldung: **28.06.2023**
(21) Anmeldenummer: 21217001.3
(22) Anmeldetag: 22.12.2021
(51) Int. Cl.: G06V 10/22, G06V 10/82, G06V 10/56

(54) **VERFAHREN ZUR ERFASSUNG EINES SCHADENS AN EINEM FAHRZEUG**

(71) Anmelder: TÜV Rheinland Schaden- und Wertgutachten GmbH, 51105 Köln (DE)
(72) Erfinder: Röckers, Christian, 44791 Bochum (DE); Weissenburger, Andreas, 44809 Bochum (DE)
(74) Vertreter: dompatent von Kreisler Selting Werner - Partnerschaft von Patent- und Rechtsanwälten mbB

(57) **Zusammenfassung**

Verfahren und Vorrichtung zur Erfassung eines Schadens an einem Fahrzeug mit den Schritten: Erfassen von optischen Daten des Fahrzeugs; Ermitteln von mehreren Oberflächenparametern aus den optischen Daten; und Bestimmen einer Schadenswahrscheinlichkeit aus den mehreren Oberflächenparametern für eine Vielzahl von Punkten der Fahrzeugoberfläche.

## Beschreibung

Die vorliegende Erfindung betrifft ein Verfahren zur Erfassung eines Schadens an einem Fahrzeug. Weiterhin betrifft die vorliegende Erfindung eine Vorrichtung zur Durchführung eines solchen Verfahrens.

Die Erfassung von Schäden an Fahrzeugen erfolgt bisher manuell und erfordert somit besonders geschultes Personal. Gleichzeitig erfordert die zuverlässige Erkennung von Schäden auch für geschultes Personal eine erhebliche Zeit, sodass Verzögerungen auftreten und gleichzeitig hohe Kosten entstehen. Dabei stellt die Schadenserfassung beispielsweise die Grundlage einer Wertbeurteilung dar, kann jedoch auch herangezogen werden für die Planung von Werkstattaufenthalten oder die Beurteilung von Versicherungsfällen beispielsweise bei Leihwagen oder Leasingwagen. Dabei kann die frühzeitige Erkennung von Schäden geeignet sei, um Folgeschäden beispielsweise durch Rost oder dergleichen zu verhindern. Insbesondere bei einer großen Fahrzeugflotte im Rahmen eines Flottenmanagements kann es daher gewünscht sein, regelmäßig Schäden an den jeweiligen Fahrzeugen zu erfassen und zu dokumentieren. Dies ist bisher nicht oder nur mit großem Aufwand möglich.

Somit besteht der Wunsch zur automatisierten und zuverlässigen Erfassung von Schäden an einem Fahrzeug.

Die Aufgabe wird gelöst durch ein Verfahren gemäß Anspruch 1 sowie eine Vorrichtung zur Durchführung des Verfahrens gemäß Anspruch 15.

Das erfindungsgemäße Verfahren zur Erfassung eines Schadens an einem Fahrzeug ist insbesondere ausgebildet als computerimplementiertes Verfahren. Das Verfahren weist dabei die Schritte auf: Verfahren zur Erfassung eines Schadens an einem Fahrzeug mit den Schritten:
- Erfassen von optischen Daten des Fahrzeugs;
- Ermitteln von mehreren Oberflächenparametern aus den optischen Daten; und
- Bestimmen einer Schadenswahrscheinlichkeit aus den mehreren Oberflächenparametern für eine Vielzahl von Punkten der Fahrzeugoberfläche.

Somit werden zunächst optische Daten des Fahrzeugs erfasst beispielsweise durch eine oder mehrere Kameras. Insbesondere kann eine Vorrichtung zur Erfassung der optischen Daten verwendet werden, wie sie in der europäischen Anmeldung EP 3 593 085 beschrieben ist.

Aus den optischen Daten werden sodann mehrere Oberflächenparameter ermittelt, welche die Oberfläche des jeweiligen Fahrzeugs charakterisieren.

Aus den mehreren Oberflächenparametern werden sodann für eine Vielzahl von Punkten der Fahrzeugoberfläche eine Schadenswahrscheinlichkeit ermittelt. Hierbei werden insbesondere für alle Punkte der Fahrzeugoberfläche, für die entsprechende Oberflächenparameter ermittelt wurden, eine entsprechende Schadenswahrscheinlichkeit ermittelt. Dabei gibt die Schadenswahrscheinlichkeit die Wahrscheinlichkeit eines Schadens an der jeweiligen Stelle wieder. Somit kann aus der Bestimmung der Schadenswahrscheinlichkeit für die erfassten Punkte der Fahrzeugoberfläche ein Schaden automatisiert ermittelt werden auf Basis der jeweiligen Oberflächenparameter. Eine händische Inspektion ist hierzu nicht erforderlich. Durch die Berücksichtigung mehrerer Oberflächenparameter gleichzeitig, kann eine zuverlässige Erfassung von Schäden gewährleistet werden, wodurch eine Falscherkennung von Schäden minimiert wird. Da es sich hierbei insbesondere um ein computerimplementiertes Verfahren handelt, kann das Verfahren schnell ausgeführt werden, wodurch Verzögerungen minimiert werden und ebenfalls Kosten reduziert werden. Gleichzeitig ist kein besonderes geschultes Personal mehr erforderlich, welches auf Grundlage seiner Erfahrung Schäden erkennt und beurteilt.

Vorzugsweise wird zunächst eine Fahrzeuggeometrie erfasst. Hierbei kann die vorher erfasste Fahrzeuggeometrie in einer Datenbank hinterlegt werden und sodann bei der Durchführung des Verfahrens aus der Datenbank abgerufen werden. Somit können die Oberflächenparameter Punkten der Fahrzeuggeometrie zugeordnet werden. Damit besteht eine eindeutige Zuordnung zwischen den erfassten Oberflächenparametern und den Punkten auf der Fahrzeugoberfläche bzw. der Fahrzeuggeometrie. Hierdurch können erfasste Schäden einzelnen Bauteilen zugeordnet werden und beispielsweise für eine Reparatur oder Schadensbeurteilung genau lokalisiert werden. Dabei wird die Fahrzeuggeometrie insbesondere für unterschiedliche Fahrzeuge bzw. Fahrzeugtypen oder Fahrzeugmarken lediglich einmal erfasst und kann sodann in der Datenbank hinterlegt werden. Erfolgt sodann eine Schadenserfassung für ein Fahrzeug einer bestimmten Marke mit einem bestimmen Modell, kann die entsprechende Geometrie des Fahrzeugs aus der Datenbank abgerufen werden und für das erfindungsgemäße Verfahren genutzt werden.

Vorzugsweise werden Marker an das Fahrzeug und insbesondere an charakteristische Punkte des Fahrzeugs angebracht, wobei anhand der Marker die Position der Fahrzeuggeometrie erfasst wird. Dabei kann es sich bei dem charakteristischen Punkten beispielsweise um Punkte der Schulterlinie handeln, Übergangspunkten zwischen Bauteilen des Fahrzeugs, wie beispielsweise charakteristische Punkte am Übergang zwischen der Karosserie und der Verglasung, oder dergleichen. Aufgrund der Marker erfolgt eine eindeutige Ausrichtung des Fahrzeugs bei der Erfassung durch die eine oder mehreren Kameras, sodass eine Ausrichtung der zuvor erfassten Fahrzeuggeometrie und dem Fahrzeug erfolgen kann. Somit lassen sich Punkte auf der Fahrzeuggeometrie eindeutig den optischen Daten zuordnen, ohne dass eine vollständige Erfassung der Geometrie des Fahrzeugs bei jeder Schadenserfassung erforderlich wäre. Insbesondere lassen sich den optischen Daten Positionen auf der Fahrzeugoberfläche bzw. der Fahrzeuggeometrie zuordnen. Hierdurch wird das Verfahren vereinfacht und die Anforderung an das optische Erfassungssystem reduziert, da keine genaue Erfassung der Oberflächentopologie erforderlich ist, sondern die einfach zu erfassenden Marker herangezogen werden können.

Vorzugsweise werden für mehrere und insbesondere für jeden Pixel der optischen Daten jeweils ein Oberflächenparameter bestimmt. Alternativ oder zusätzlich hierzu wird für jeden und insbesondere alle Oberflächenparameter jeweils eine Schadenswahrscheinlichkeit bestimmt. So werden eine erste Vielzahl M von Pixeln als optische Daten erfasst. Sodann wird für eine zweite Vielzahl N der Pixel jeweils die entsprechenden Oberflächenparameter bestimmt für die jeweiligen Punkte der Fahrzeugoberfläche. Anschließend wird aus den N Oberflächenparametern für eine dritte Vielzahl R von Punkten der Fahrzeugoberfläche eine jeweilige Schadenswahrscheinlichkeit bestimmt. Es gilt somit M ≥ N ≥ R. Dabei können mehrere Pixel der optischen Daten für die Bestimmung eines Oberflächenparameters herangezogen werden, wobei es sich beispielsweise um die benachbarten Pixel handeln kann. Ebenfalls kann bei der Bestimmung der Schadenswahrscheinlichkeit für einen bestimmten Punkt der Fahrzeugoberfläche mehrere Oberflächenparameter, insbesondere benachbarte Punkte der Fahrzeugoberfläche, berücksichtigt werden. Somit ist es nicht erforderlich, dass aus jeweils einem Pixel der optischen Daten allein eine entsprechende Schadenswahrscheinlichkeit bestimmt wird. Die Zuverlässigkeit des Verfahrens wird erhöht, sofern Informationen der benachbarten Pixel der optischen Daten ebenfalls berücksichtigt werden und/oder die Oberflächenparameter benachbarter Punkte auf der Fahrzeugoberfläche ebenfalls berücksichtigt werden bei der Bestimmung der Schadenswahrscheinlichkeit.

Vorzugsweise ist die Schadenswahrscheinlichkeit binär durch Vergleich mit einem vorgegebenen Schadensgrenzwert. Somit kann auf einfache Weise das Vorliegen eines Schadens aus der Schadenswahrscheinlichkeit abgeleitet werden. Hierbei kann lediglich ein Schadensgrenzwert vorgesehen sein. Alternativ hierzu kann die Schadenswahrscheinlichkeit mehrere diskrete Werte aufweisen, welche durch eine entsprechende Anzahl von Schadensgrenzwerten ermittelt werden. Alternativ hierzu ist die Schadenswahrscheinlichkeit kontinuierlich.

Vorzugsweise umfasst die Schadenswahrscheinlichkeit insbesondere ein Konfidenzlevel, welche die Zuverlässigkeit der so ermittelten Schadenswahrscheinlichkeit wiedergibt. Sollte dabei beispielsweise der Konfidenzlevel unter einem Konfidenzlevelgrenzwert liegen, kann eine manuelle Nachbeurteilung erfolge. Hierdurch werden die Zuverlässigkeit und die Aussagekraft des erfindungsgemäßen Verfahrens weiter erhöht.

Vorzugsweise handelt es sich bei den Oberflächenparametern um eines oder mehrere aus der Farbinformation, der Reflektivität und/oder der Krümmung. Die Verwendung weiterer Oberflächenparameter ist jedoch nicht ausgeschlossen. So können die mehreren Oberflächenparameter lediglich eines der Farbinformation, der Reflektivität und der Krümmung umfassen sowie einen weiteren Oberflächenparameter. Alternativ hierzu weisen die Oberflächenparameter genau die Farbinformation, die Reflektivität und die Krümmung auf. Dabei handelt es sich insbesondere bei der Reflektivität um die relative Reflektivität R/Ro, wobei R das gemessene reflektierte Signal darstellt und R₀ beispielsweise die Intensität einer Beleuchtung des Fahrzeugs. Weiterhin handelt es sich insbesondere bei der Krümmung um mindestens eine der Hauptkrümmung und insbesondere beide Hauptkrümmungen am jeweiligen Punkt der Fahrzeuggeometrie. Insbesondere wird ein Signal erzeugt, welches abgeleitet ist aus den Hauptkrümmungen der jeweiligen Punkte der Fahrzeuggeometrie.

Vorzugsweise wird aus der Schadenswahrscheinlichkeit eine Schadensklasse ermittelt wobei unterschiedliche Schadensklassen unterschiedliche Arten von Schäden umfassen. Dabei können beispielsweise unterschiedliche Schadensklassen für Dellen, Kratzer, Lack Abplatzer, Hagelschäden und dergleichen berücksichtigt werden. Unterschiedliche Schadensklassen weisen unterschiedliche Charakteristika ihrer Schäden auf, sodass anhand der Schadenswahrscheinlichkeit die jeweiligen Schäden einer Schadensklasse zugeordnet werden können.

Vorzugsweise werden bei der Bestimmung des Schadens und oder Schadenswahrscheinlichkeit Metadaten berücksichtigt. Dabei können die Metadaten eines oder mehreres umfassen von einer Schadensgröße, einer Bauteilzugehörigkeit, einer Tiefe des Schadens und/oder einer Anzahl der Schäden insbesondere pro Bauteil. Somit erfolgt eine Bestimmung des Schadens anhand der Metadaten aus der Schadenswahrscheinlichkeit oder der jeweiligen aus der Schadenswahrscheinlichkeit bestimmten Schadensklasse. Durch Berücksichtigung dieser Metadaten erhöht sich die Genauigkeit des erfindungsgemäßen Verfahrens und eine genauere Charakterisierung der jeweiligen Schäden wird ermöglicht. Dabei kann beispielsweise die Bauteilzugehörigkeit hinterlegt sein zusammen mit der Fahrzeuggeometrie oder eingegeben werden als zusätzliche Information und herangezogen werden bei der Bestimmung der Schadenswahrscheinlichkeit und/oder des Schadens. Schadensgröße und/oder Tiefe des Schadens und/oder Anzahl der Schäden können aus der Schadenswahrscheinlichkeit bestimmt werden und sodann herangezogen werden zur Bestimmung des Schadens. Weitere Metadaten, welche als zusätzliche Informationen bei der Bestimmung des Schadens berücksichtigt werden, können vom Benutzer eigegeben werden und bei späteren Bestimmungen des Schadens beispielsweise für Fahrzeuge des selben Herstellers und/oder des selben Modells berücksichtigt werden.

Vorzugsweise wird der ermittelte Schaden herangezogen für eine Wertbeurteilung des Fahrzeugs. Diese kann ebenfalls automatisiert erfolgen anhand der ermittelten Schäden und weiteren fahrzeugspezifischen Daten, wie Modell, Hersteller, Baujahr, Fahrleistung, Ausstattung, Vorbesitzer, Unfallhistorie, Motorisierung oder dergleichen.

Vorzugsweise erfolgt das Bestimmen der Schadenswahrscheinlichkeit mittels eines trainierten Netzwerks, welches eine Korrelation zwischen den mehreren Oberflächenparametern und der jeweiligen Schadenswahrscheinlichkeit ausgibt. Dabei handelt es sich insbesondere bei dem Netzwerk um ein convolutional network. Dieses erhält als Eingabe die optischen Daten des Fahrzeugs. Alternativ erhält das Netzwerk die mehreren Oberflächenparameter, welche insbesondere Punkte der Fahrzeuggeometrie zugeordnet sind. Aus diesen Eingabedaten wird dann mittels des trainierten Netzwerks eine Ausgabe generiert, welche die Schadenswahrscheinlichkeit für die jeweiligen Punkte der Fahrzeugoberfläche bzw. der Fahrzeuggeometrie enthält. Dabei kann die Ausgabe als Schadensmaske erfolgen.

Vorzugsweise wird das Netzwerk trainiert anhand klassifizierter Trainingsdaten aus erfassten und klassifizierten Schäden für eine bestimmte Fahrzeuggeometrie.

Vorzugsweise werden die Trainingsdaten angepasst durch Änderung der Fahrzeuggeometrie bei insbesondere gleichbleibenden Schäden und insbesondere durch Adaption fahrzeugspezifischer Merkmale. Es hat sich herausgestellt, dass ein Training des Netzwerks bei gleichbleibenden Schäden jedoch sich ändernder Fahrzeuggeometrie als vorteilhaft erwiesen, um die Genauigkeit des trainierten Netzwerks zu erhöhen bzw. das Netzwerk schneller zu trainieren mit weniger Trainingsdaten. Dabei werden die Fahrzeuggeometrien der Trainingsdaten insbesondere durch Hinzufügung fahrzeugspezifischere Merkmale wie Designkanten und Bauteilfugen angepasst, zur Erhöhung der Genauigkeit der Ausgabe des trainierten Netzwerks bzw. einer Verbesserung des Trainings. Dabei wird beispielsweise die Fahrzeuggeometrie der Trainingsdaten bei insbesondere gleichbleibenden Schäden angepasst durch Hinzufügung einer Designkante als fahrzeugspezifisches Merkmal und den Trainingsdaten hinzugefügt. Hierdurch wird ein verbessertes Training erreicht und Schäden zuverlässiger erkannt.

Vorzugsweise erfolgt die Erfassung der optischen Daten mit mehreren Kameras, wobei insbesondere eine Absolut-Phasen-Messung erfolgt. Hinsichtlich der Vorrichtung zur Erfassung der optischen Daten wird verwiesen auf EP 3 593 085, welche vollumfänglich einbezogen wird.

Vorzugsweise werden die optischen Daten der unterschiedlichen Kameras zusammengeführt zur Erfassung insbesondere des gesamten Fahrzeugs. Im Sinne einer Sensorfusion erfolgt somit ein Kombinieren der optischen Daten der unterschiedlichen Kameras zu einem Gesamtbild, welches zur Bestimmung der Oberflächenparameter herangezogen wird. Alternativ oder zusätzlich hierzu werden die Oberflächenparameter, welche auf Grundlage der optischen Daten der unterschiedlichen Kameras ermittelt wurden, zusammengeführt im Sinne einer Sensorfusion, sodass eine einheitliche Wiedergabe der Oberflächenparameter insbesondere das gesamte Fahrzeug abdecken. Alternativ oder zusätzlich hierzu werden die Schadenswahrscheinlichkeiten für die optischen Daten der unterschiedlichen Kameras unabhängig voneinander bestimmt und sodann insbesondere erst nach dem Anwenden dieser optischen Daten auf das Netzwerk zusammengeführt. Hierdurch können Variationen bei der Beurteilung der Oberflächenparameter insbesondere durch das Netzwerk ausgeglichen werden aufgrund eines Überlapps der unterschiedlichen Kameras.

Vorzugsweise werden die optischen Daten mit einem vorgegebenen Erfassungsgrenzwert verglichen. Dieser Vergleich kann pixelweise oder bereichsweise für die optischen Daten erfolgen. Dabei werden bei Unterschreiten des Erfassungsgrenzwertes, die optischen Daten teilweise verworfen. Dabei kann ein pixelweises Verwerfen der optischen Daten erfolgen oder ein bereichsweises Verwerfen der optischen Daten. Hierbei kann insbesondere auf den Kontrast der erfassten optischen Daten abgestellt werden. Liegt der Kontrast der erfassten optischen Daten unterhalb des Erfassungsgrenzwerts, werden diese optischen Daten nicht für die Bestimmung der Oberflächenparameter und somit nachfolgend für die Bestimmung der Schadenswahrscheinlichkeit herangezogen. Hierdurch können Übergangsbereiche zwischen den erfassbaren Oberflächen für die jeweilige Kamera und den durch diese Kamera nicht erfassbaren Oberflächen einer entsprechenden Fahrzeuggeometrie bei der Bestimmung der Schadenswahrscheinlichkeit ausgeschlossen werden. Somit erfolgt keine Bestimmung der Schadenswahrscheinlichkeit aufgrund von fehlerhaften optischen Daten, wodurch die Zuverlässigkeit des Verfahrens weiter erhöht wird und insbesondere Falsch-Positiv-Ergebnisse reduziert werden. Neigt sich beispielsweise eine Fahrzeugoberfläche weg von der jeweiligen Kamera, sodass keine oder nur noch wenig Licht von dieser Oberfläche zur Kamera reflektiert wird, sinkt die Zuverlässigkeit der erfassten optischen Daten, sodass hieraus falsche oder zumindest fehlerhafte Schadenswahrscheinlichkeiten bestimmt werden würden. Aufgrund des Vergleichs der optischen Daten mit dem vorgegebenen Erfassungsgrenzwert und dem Verwerfen unzureichender optischer Daten wird somit der Fehler des erfindungsgemäßen Verfahrens reduziert.

Weiterhin betrifft die vorliegende Erfindung eine Vorrichtung zur Durchführung des zuvor beschriebenen Verfahrens mit mindestens einem Prozessor und einem Speicher. Dabei enthält der Speicher Instruktionen, die, wenn durch den Prozessor ausgeführt, die Schritte des Verfahrens ausführen. Dabei kann die Vorrichtung beispielsweise verbunden sein mit einer Vorrichtung zur Erfassung der optischen Daten wie beispielsweise in EP 3 593 085 beschrieben. Dabei kann der Prozessor in bekannter Weise ausgebildet sein. Alternativ hierzu kann der Prozessor ausgebildet sein als FPGA oder ASIC. Dabei kann insbesondere das Netzwerk als Softwareimplementierung im Speicher hinterlegt sein und sodann durch den Prozessor ausgeführt werden. Alternativ hierzu kann das Netzwerk in der Hardware implementiert sein, entweder in dem mindestens einen Prozessor oder einem weiteren zusätzlichen Prozessor.

Weiterhin wird die Erfindung anhand bevorzugter Ausführungsform unter Bezugnahme auf die anliegenden Zeichnungen erläutert.

Es zeigen:
Figur 1 schematische Aufbau zur Erfassung eines Schadens an einem Fahrzeug,
Figur 2 schematischer Ablauf des Verfahrens gemäß der vorliegenden Erfindung,
Figur 3 Details des Verfahrens zur Erfassung eines Schadens gemäß der vorliegenden Erfindung,
Figur 4 exemplarische Ausgabe des Verfahrens zur Erfassung eines Schadens an einem Fahrzeug gemäß der vorliegenden Erfindung,
Figur 5A und 5B Details bei der Bestimmung des Schadens an einem Fahrzeug,
Figur 6 Details bzgl. dem Training des verwendeten Netzwerks gemäß der vorliegenden Erfindung und
Figur 7 Details zum Training des Netzwerks gemäß der vorliegenden Erfindung.

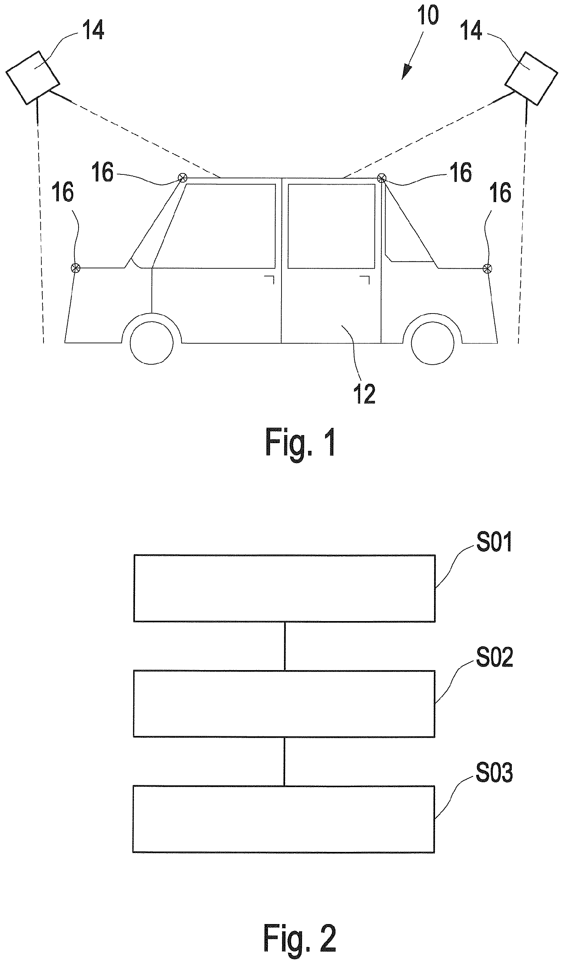

Gemäß Figur 1 wird in einer nicht weiter spezifizierten Vorrichtung 10 das zu erfassende Auto 12 platziert. Dabei kann es sich bei der Vorrichtung um eine oder mehrere Kameras handeln, welche das zu erfassende Fahrzeug 12 erfassen. Alternativ hierzu handelt es sich um eine Vorrichtung gemäß der EP 3 593 085. Insbesondere erfolgt durch die Vorrichtung eine Absolut-Phasen-Messung. Zusätzlich zu den in der Figur 1 gezeigten Kameras 14 können eine oder mehrere Beleuchtungen vorhanden sein, welche das zu erfassende Fahrzeug beleuchten, wobei von den Kameras 14 das durch die Fahrzeugoberfläche reflektierte Licht der Beleuchtung erfasst wird. Insbesondere ist die Fahrzeuggeometrie des zu erfassenden Fahrzeugs 12 in einer Datenbank hinterlegt. Zur Hinterlegung der Fahrzeuggeometrie eines bestimmten Herstellers für ein bestimmtes Modell, kann zunächst das Fahrzeug erfasst werden in seiner dreidimensionalen Form. Dies kann erfolgen durch Stereomessung, LIDAR, RADAR oder Lasertriangulation beispielsweise durch Beleuchtung mittels eines Linienlasers. Weitere Methoden zur Erfassung der Fahrzeuggeometrie sind ebenfalls möglich und die vorliegende Erfindung ist hierauf nicht beschränkt. Die dabei erfasste Fahrzeuggeometrie wird sodann für das bestimmte Modell eines Fahrzeugherstellers in einer Datenbank hinterlegt. Stimmt das Modell und der Hersteller des zu erfassenden Fahrzeugs 12 mit einem in der Datenbank hinterlegten Fahrzeug überein, so kann die in der Datenbank hinterlegte Fahrzeuggeometrie herangezogen werden bei dem erfindungsgemäßen Verfahren zur Erfassung eines Schadens. Um die hinterlegte Fahrzeuggeometrie mit der Fahrzeuggeometrie des zur erfassenden Fahrzeugs 12 in Übereinstimmung zu bringen, können Marker 16 an der Fahrzeugoberfläche des zu erfassenden Fahrzeugs 12 angebracht werden. Hierbei werden die Marker 16 an charakteristischen Positionen des zu erfassenden Fahrzeugs 12 angebracht. Die Position der Marker 16 sind in der in der Datenbank hinterlegten Fahrzeuggeometrie ebenfalls hinterlegt, sodass die hinterlegte Fahrzeuggeometrie in der Datenbank mit der Geometrie des zu erfassenden Fahrzeugs 12 in Übereinstimmung gebracht werden kann. Somit können eindeutig die Position einzelner Punkte auf der Fahrzeugoberfläche des zu erfassenden Fahrzeugs 12 identifiziert werden und eine Zuordnung eventuell vorhandener Schaden zu den hierdurch bestimmten Punkten/Positionen der Fahrzeugoberfläche ist möglich.

Gemäß Figur 2 weist das Verfahren die folgenden Schritte auf:
In Schritt S01 werden optische Daten erfasst insbesondere wie in Bezug auf Figur 1 vorstehend erläutert. Dabei kann die Erfassung der optischen Daten des Fahrzeugs durch eine oder mehrere Kameras 14 erfolgen oder durch eine Vorrichtung gemäß der Anmeldung EP 3 593 085.

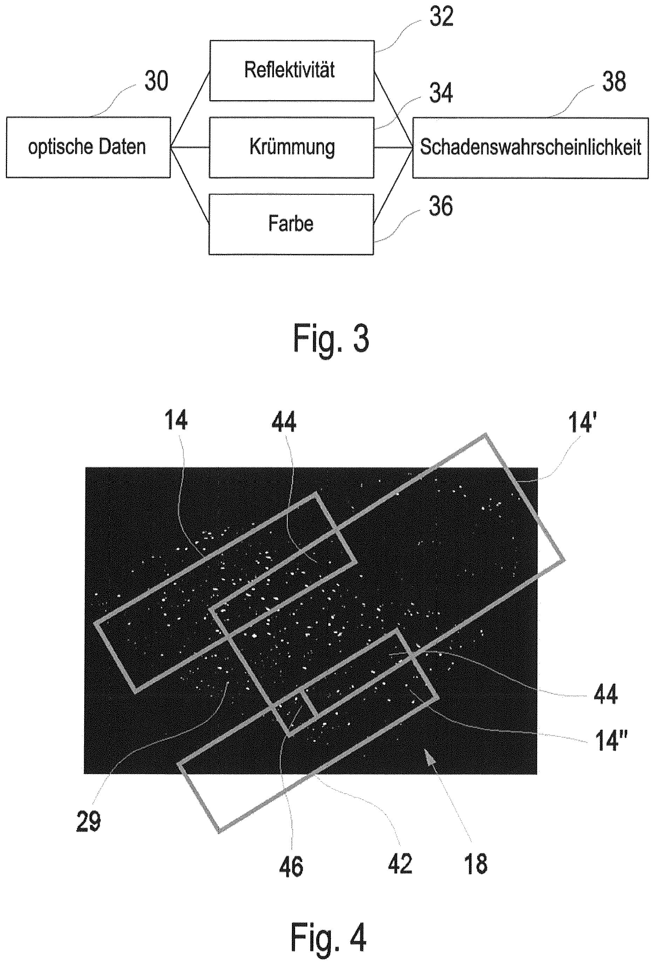

In Schritt S02 werden aus den optischen Daten mehrere Oberflächenparameter ermittelt. Dies ist insbesondere in der Figur 3 dargestellt. Aus den optischen Daten 30 können sodann als Oberflächenparameter die Reflektivität 32, die Krümmung 34 oder die Farbe 36 ermittelt werden. Hierbei handelt es sich bei der Reflektivität um eine relative Reflektivität R/Ro, wobei R die durch die Kameras 14 empfangene Intensität bezeichnet und R₀ die empfangene Intensität bezeichnet ohne ein zu erfassendes Fahrzeug 12. Bei der Krümmung handelt es sich insbesondere um mindesten eine der Hauptkrümmungen und insbesondere beide Hauptkrümmungen. Insbesondere wird ein Signal erzeugt, welches abgeleitet ist aus den Hauptkrümmungen der jeweiligen Punkte der Fahrzeuggeometrie. Die Farbe 36 kann aus den optischen Daten entnommen werden. Insbesondere aufgrund der Kenntnis der Fahrzeuggeometrie des zu erfassenden Fahrzeugs 12, können die Oberflächenparameter einzelnen Punkten auf der Oberfläche des zu erfassenden Fahrzeugs 12 zugeordnet werden. Hierbei können eine Vielzahl von Punkten auf der Oberfläche des erfassenden Fahrzeugs ausgewählt werden, denen, anhand der optischen Daten, die entsprechenden Oberflächenparameter zugeordnet werden können. Alternativ wird für jeden Pixel der erfassten optischen Daten jeweils mehrere der Oberflächenparameter ermittelt. Dabei sind die Oberflächenparameter nicht auf die Reflektivität, Krümmung und Farbe beschränkt. Weitere Oberflächenparameter sind ebenfalls möglich.

In Schritt S03 wird eine Schadenwahrscheinlichkeit aus den mehreren Oberflächenparametern bestimmt. Dies ist ebenfalls in der Figur 3 dargestellt, bei welcher exemplarisch aus der Reflektivität 32, der Krümmung 34 und der Farbe 36 als Oberflächenparameter die Schadenswahrscheinlichkeit 38 ermittelt wird. Dabei können Oberflächenparameter einer ersten Vielzahl von Punkten herangezogen werden, für die sodann die jeweilige Schadenswahrscheinlichkeit 38 ermittelt wird. Es ist somit nicht erforderlich, dass für alle Punkte für die ein oder mehrere Oberflächenparameter ermittelt werden, jeweils auch eine Schadenswahrscheinlichkeit 38 bestimmt wird. Vorzugsweise wird jedoch für jeden Punkt auf der Fahrzeugoberfläche des zu erfassenden Fahrzeugs 12, für den ein oder mehrere Oberflächenparameter bestimmt werden, eine entsprechende Schadenswahrscheinlichkeit 38 ermittelt. Hierbei wird zur Bestimmung der Schadenswahrscheinlichkeit insbesondere ein trainiertes Netzwerk verwendet, welches eine Korrelation zwischen den mehreren Oberflächenparametern und der Schadenswahrscheinlichkeit ausgibt. Insbesondere handelt es ich bei dem Netzwerk um eine convolutional network und kann sodann für die Vielzahl ausgewählter Punkte der Fahrzeugoberfläche des zu erfassenden Fahrzeugs 12 eine entsprechende Schadenswahrscheinlichkeit 38 ermittelt werden. Eine exemplarische Ausgabe 18 des Netzwerks ist in Figur 4 dargestellt. Hierbei ist in Figur 4 lediglich die Fahrzeugfront erfasst, wobei helle Punkte in der Ausgabe 18 Schäden 29 anzeigen. In dem Beispiel der Figur 4 ist deutlich ein großflächiger Hagelschaden zu erkennen. Dabei kann die Ausgabe erfolgen als Schadensmaske, wie in der Figur 4 dargestellt, welche jedem Punkt auf der Fahrzeugoberfläche des zu erfassenden Fahrzeugs 12 einen entsprechenden Schaden zuordnet. Hierbei kann die Schadenswahrscheinlichkeit 38 binär sein beispielsweise durch den Vergleich mit einem vorgegebenen Grenzwert. Überschreitet die Schadenswahrscheinlichkeit, welche von dem Netzwerk ausgegeben wird, diesen vorgegebenen Grenzwert, so wird in der Ausgabe 18 ein Schaden 29 angezeigt. Alternativ hierzu kann die Ausgabe 18 stufenweise erfolgen, wobei mehrere Grenzwerte vorgegeben sind, sodass stufenweise eine Beurteilung als Schaden 29 erfolgt. Alternativ hierzu ist die Schadenswahrscheinlichkeit kontinuierlich. Zusätzlich zu der Schadenswahrscheinlichkeit kann in der Ausgabe ein Konfidenzlevel berücksichtigt werden, welche die Zuverlässigkeit der Aussage der durch das Netzwerk ermittelten Schadenswahrscheinlichkeit wiedergibt.

Insbesondere erfolgt kein Ist-Soll-Vergleich zwischen der in der Datenbank hinterlegten Fahrzeuggeometrie und der durch die optischen Daten erfassten Fahrzeuggeometrie. Aus den optischen Daten 30 des zu erfassenden Fahrzeugs 12 wird insbesondere keine Geometrie des Fahrzeugs 12 ermittelt. Vielmehr erfolgt punktweise bzw. pixelweise eine Bestimmung der jeweiligen Oberflächenparameter. Auch die hierbei ermittelte Krümmung 34 wird nicht mit einer Soll-Krümmung der Fahrzeuggeometrie verglichen, sondern wird zur Bestimmung der Schadenswahrscheinlichkeit 38 herangezogen.

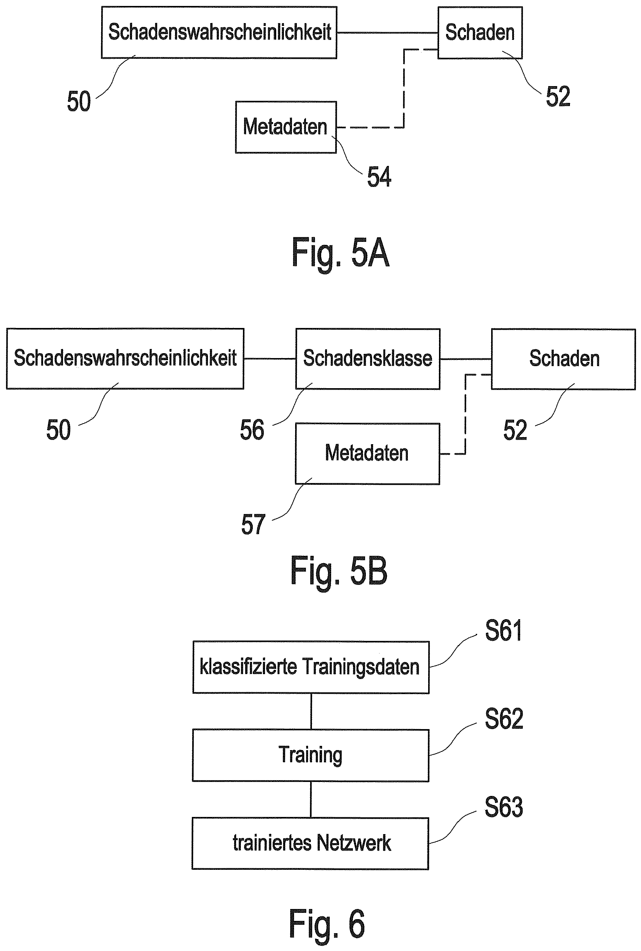

Gemäß Figur 5A wird dabei aus der Schadenswahrscheinlichkeit 50 ein Schaden 52 ermittelt. Dabei entspricht die Schadenswahrscheinlichkeit 50 der Figuren 5A und 5B er Schadenswahrscheinlichkeit 38 der Figure 3. Die Information über den Schaden 52 kann sodann herangezogen werden beispielsweise für eine Beurteilung des Fahrzeugwertes, eine Planung einer entsprechenden Reparatur, bei der Abwicklung einer Fahrzeugrückgabe beispielsweise nach Mieten oder Leasen des Fahrzeugs oder dergleichen. Insbesondere werden hierbei zur Bestimmung des Schadens 52 Metadaten 54 berücksichtigt. Diese Metadaten 54 umfassen beispielsweise die Schadensgröße, eine Bauteilzugehörigkeit, eine Tiefe des Schadens und/oder eine Anzahl der Schäden insbesondere pro Bauteil. Die Beurteilung des Schadens 52 kann somit weitere Parameter berücksichtigen, welche als Metadaten 54 einfließen.

Gemäß Figur 5B kann aus der Schadenswahrscheinlichkeit 50 zunächst eine Schadensklasse 56 ermittelte werden, wobei aus der Schadensklasse wiederum ein Schaden 52, wie vorstehend unter Bezug auf die Figur 5A beschrieben, ermittelt wird. Dabei umfasst die Schadensklasse 56 unterschiedliche Arten von Schäden wie beispielsweise Delle, Kratzer, Lackabplatzer oder dergleichen. Die Schadensklasse 56 zusammen mit den Metadaten 54 wird sodann herangezogen zur Bestimmung des Schadens 52. Hierdurch kann eine zuverlässige Vorhersage der Schäden des zu erfassenden Fahrzeugs 12 bestimmt werden. Dabei kann beispielsweise die Bauteilzugehörigkeit hinterlegt sein zusammen mit der Fahrzeuggeometrie oder eingegeben werden als zusätzliche Information und herangezogen werden beispielsweise durch das Netzwerk bei der Bestimmung der Schadenswahrscheinlichkeit. Alternativ wird die Bauteilzugehörigkeit berücksichtigt bei der Bestimmung des Schadens 52. Schadensgröße und/oder Tiefe des Schadens und/oder Anzahl der Schäden, insbesondere pro Bauteil, können aus der Schadenswahrscheinlichkeit, insbesondere mittels des Netzwerks, bestimmt werden und sodann herangezogen werden zur Bestimmung des Schadens 52. Weitere Metadaten 54, welche als zusätzliche Informationen bei der Bestimmung des Schadens 52 berücksichtigt werden, können vom Benutzer eigegeben werden und bei späteren Bestimmungen des Schadens 52 beispielsweise für Fahrzeuge des selben Herstellers und/oder des selben Modells berücksichtigt werden.

Gemäß Figur 1 werden zur Erfassung der optischen Daten eine Vielzahl von Kameras 14 verwendet. Diese können überlappende Bereiche 42 des zu erfassenden Fahrzeugs 12 erfassen, wie dies in Figur 4 dargestellt ist. In den Überlappungsbereichen 44 stehen somit optischen Daten mehrere Kameras 14, 14', 14" bereit zur Auswertung. Hierbei könne die optischen Daten zusammengeführt werden und somit die gesamten optische Daten der Auswertung der Schäden zu Grunde gelegt werden. Alternativ hierzu werden zunächst die Oberflächenparameter der Bereiche 42 der jeweiligen Kameras 14, 14', 14" ermittelt und sodann zusammengeführt zu einer gesamten Repräsentation der Oberflächenparameter, welche sodann herangezogen werden zur Bestimmung der Schadenswahrscheinlichkeit. Alternativ hierzu werden die Oberflächenparameter für jeden Bereich 42 der jeweiligen Kameras 14, 14', 14" unabhängig voneinander bestimmt. Sodann wird für jeden Bereich 42 unabhängig die Schadenswahrscheinlichkeit aus den mehreren Oberflächenparametern bestimmt insbesondere mittels eines trainierten Netzwerks. Sodann werden die hieraus ermittelten Schadenswahrscheinlichkeiten kombiniert im Sinne einer Sensorfusion. Dies kann im einfachsten Fall durch Bildung eines Mittelwertes erfolgen. Andere Möglichkeiten sind ebenfalls gegeben, wobei insbesondere der Konfidenzlevel der dabei ermittelten Schadenswahrscheinlichkeiten berücksichtigt werden kann.

Insbesondere bei Flächen des zu erfassenden Fahrzeugs 12, welche stark geneigt sind relativ zu der Erfassungsebene der Kamera 14, können die erfassten optischen Daten Fehler enthalten. Hierbei kann eine bereichsweise oder pixelweise Überprüfung der erfassten optischen Daten erfolgen. Unterschreiten beispielsweise die erfassten optischen Daten einen vorgegebenen Erfassungsgrenzwert, werden diese optischen Daten pixelweise oder bereichsweise verworfen. Dies ist im Beispiel der Figur 4 dargestellt. In dem Bereich 46 seien die optischen Daten erfasst durch die Kamera 14" unzureichend beispielsweise auf Grund eines zu geringen Kontrasts, unzureichende Farbinformation oder dergleichen. Liegt somit beispielsweise der Kontrast unterhalb eines Kontrastgrenzwert als Erfassungsgrenzwert, wird der Bereich 46 der optischen Daten erfasst durch die Kamer 14" verworfen. Aufgrund des Überlapps 44 stehen jedoch optischen Daten in dem verworfenen Bereich 46 erfasst durch die Kamera 14' zur Verfügung, welche sodann herangezogen werden zur Bestimmung des Schadens bzw. der Schadenswahrscheinlichkeit.

Insbesondere erfolgt kein Ist-Soll-Vergleich zwischen der in der Datenbank hinterlegten Fahrzeuggeometrie und der durch die optischen Daten erfassten Fahrzeuggeometrie. Aus den optischen Daten 30 des zu erfassenden Fahrzeugs 12 wird insbesondere keine Geometrie des Fahrzeugs ermittelt. Vielmehr erfolgt punktweise bzw. pixelweise eine Bestimmung der jeweiligen Oberflächenparameter. Auch die hierbei ermittelte Krümmung 34 wird nicht mit einer Soll-Krümmung der Fahrzeuggeometrie verglichen, sondern wird zur Bestimmung der Schadenswahrscheinlichkeit 38 herangezogen.

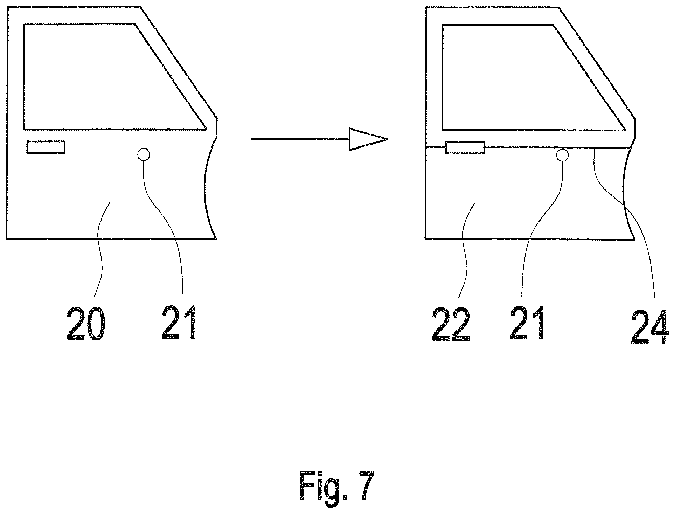

Gemäß Figur 6 erfolgt das Training des verwendeten Netzwerks durch Bereitstellen von klassifizierten Trainingsdaten gemäß Schritt S61. Diese klassifizierten Trainingsdaten enthalten optische Daten für bestimmte Fahrzeugmodelle inklusive klassifizierter und identifizierter Schäden. Anhand dieser klassifizierten Trainingsdaten erfolgt gemäß Schritt S62 ein Training des Netzwerks. Dabei wird das Training gemäß Schritt S62 solange wiederholt bis in Schritt S63 ein trainiertes Netzwerk zur Erfassung der Schäden eines Fahrzeugs zur Verfügung steht. Dabei hat sich als vorteilhaft herausgestellt die Trainingsdaten manuell dahingehen anzupassen, dass diese insbesondere bei gleichbleibenden Schäden eine veränderte Fahrzeuggeometrie aufweisen. Insbesondere erfolgt die Änderung der Fahrzeuggeometrie durch Adaption fahrzeugspezifischer Merkmale wie dies exemplarisch in Figur 7 dargestellt ist. Hierbei wird die Geometrie einer Fahrzeugtür 20 exemplarisch herausgegriffen. Zunächst erfolgt die Berücksichtigung der Fahrzeugtür 20 innerhalb des Trainings anhand der ursprünglichen Geometrie, um einen Schaden 21 zu erfassen bzw. das Netzwerk auf die Erfassung des Schadens 21 zu trainieren. Zusätzlich werden die klassifizierten Trainingsdaten ergänzt durch eine abgewandelte Fahrzeugtür 22, welche im Wesentlichen der ursprünglich Fahrzeugtür 20 entspricht. Hierbei wurde jedoch zusätzlich ein fahrzeugspezifisches Merkmal als Designkante 24 eingefügt. Dabei ist der Schaden 21 gleich. Die abgewandelte Geometrie der Fahrzeugtür 22 wird sodann ebenfalls in das Training des Netzwerks einbezogen. Dabei hat sich dabei herausgestellt, dass hierdurch ein deutlich effizienteres Training erreicht werden kann des Netzwerks und eine höhere Sicherheit bei der Erkennung möglicher Schäden erreicht werden kann.

Somit ist ein Verfahren zur automatisierten Erfassung eines Schadens an einem Fahrzeug bereitgestellt, welches zuverlässig und sicher Schäden erkennt und somit eine Beurteilung oder einer weiteren Berücksichtigung zugänglich macht. Diese Erkennung erfolgt schnell und erfordert insbesondere kein geschultes Personal, wodurch die Kosten der Schadenserkennung deutlich reduziert werden und insbesondere das Verfahren in einen automatisierten Ablauf beispielsweise bei der Rückgabe von Fahrzeugen nach einer Miete oder einem Leasing implementiert werden kann, da eine große Anzahl von Fahrzeug innerhalb kurzer Zeit erfasst werden kann.

## Patentansprüche

1. Verfahren zur Erfassung eines Schadens an einem Fahrzeug (12) mit den Schritten:
- Erfassen (S01) von optischen Daten des Fahrzeugs (12);
- Ermitteln (S02) von mehreren Oberflächenparametern aus den optischen Daten;
- Bestimmen (S03) einer Schadenswahrscheinlichkeit aus den mehreren Oberflächenparametern für eine Vielzahl von Punkten der Fahrzeugoberfläche.

2. Verfahren nach Anspruch 1, bei welchem vorher eine Fahrzeuggeometrie erfasst wird und die Oberflächenparameter Punkten der Fahrzeuggeometrie zugeordnet werden.

3. Verfahre nach Anspruch 2, bei welchem Marker (16) an das Fahrzeug (12) aufgebracht werden und anhand der Marker (16) die Position der Fahrzeuggeometrie erfasst wird.

4. Verfahren nach Anspruch 2 oder 3, bei welchem für mehrere und insbesondere für jeden Pixel der optischen Daten jeweils ein Oberflächenparameter bestimmt wird und/oder für mehrere und insbesondere alle Oberflächenparameter eine Schadenswahrscheinlichkeit bestimmt wird.

5. Verfahren nach einem der Ansprüche 1 bis 4, bei welchem die Schadenswahrscheinlichkeit binär ist durch Vergleich mit einem vorgegeben Schadensgrenzwert oder die Schadenswahrscheinlichkeit kontinuierlich ist und wobei die Schadenswahrscheinlichkeit insbesondere einen Konfidenzlevel umfasst.

6. Verfahren nach einem der Ansprüche 1 bis 5, bei welchem es sich bei den Oberflächenparametern um eines oder mehrere aus der Farbinformation, der Reflektivität und der Krümmung handelt.

7. Verfahren nach einem der Ansprüche 1 bis 6, bei welchem aus der Schadenswahrscheinlichkeit eine Schadensklasse ermittelt wird, wobei unterschiedliche Schadensklassen unterschiedliche Arten von Schäden umfassen.

8. Verfahren nach einem der Ansprüche 1 bis 7, bei welchem zur Bestimmung des Schadens und/oder der Schadenswahrscheinlichkeit Metadaten berücksichtigt werden, wobei die Metadaten eines oder mehreres umfassen von einer Schadensgröße, einer Bauteilzugehörigkeit, einer Tiefe des Schadens und einer Anzahl der Schäden.

9. Verfahren nach einem der Ansprüche 1 bis 8, bei welchem das Bestimmen der Schadenswahrscheinlichkeit mittels eines trainierten Netzwerks erfolgt, welches eine Korrelation zwischen den mehreren Oberflächenparametern und der Schadenswahrscheinlichkeit ausgibt.

10. Verfahren nach Anspruch 9, bei welchem das Netzwerk trainiert wird anhand klassifizierter Trainingsdaten aus erfassten und klassifizierten Schäden für eine Fahrzeuggeometrie.

11. Verfahren nach Anspruch 10, bei welchem die Trainingsdaten angepasst werden durch Änderung der Fahrzeuggeometrie insbesondere bei gleichbleibenden Schäden, insbesondere durch Adaption fahrzeugspezifischer Merkmale.

12. Verfahren nach Anspruch einem der Ansprüche 1 bis 11, bei welchem die optischen Daten der unterschiedlichen Kameras und/oder die Oberflächenparameter der unterschiedlichen Kameras und/oder die Schadenswahrscheinlichkeiten der unterschiedlichen Kameras zusammengeführt werden zur Erfassung insbesondere des gesamten Fahrzeugs.

13. Verfahren nach einem der Ansprüche 1 bis 12, bei welchem die optischen Daten mit einem vorgegeben Erfassungsgrenzwert verglichen werden und bei Unterschreiten des vorgegebene Erfassungsgrenzwerts zumindest teilweise verworfen werden.

14. Verfahren nach einem der Ansprüche 1 bis 13, bei welchem aus den ermittelten Schäden des Fahrzeugs eine Wertebeurteilung für das Fahrzeug ermittelt wird.

15. Vorrichtung mit mindestens einem Prozessor und einem Speicher, wobei der Speicher Instruktionen enthält, die, wenn durch den Prozessor ausgeführt, die Schritte des Verfahrens gemäß einem der Ansprüche 1 bis 14 ausführen.
